# EUROPÄISCHE PATENTSCHRIFT

(11) **EP 4 108 387 B1**
(45) Veröffentlichungstag und Bekanntmachung des Hinweises auf die Patenterteilung: **02.08.2023**
(21) Anmeldenummer: 22180513.8
(22) Anmeldetag: 22.06.2022
(51) Int. Cl.: B25J 5/00, B23Q 1/48, B25J 9/10

(54) **PLANARANTRIEBSVORRICHTUNG UND VERFAHREN ZUM BETRIEB EINER PLANARANTRIEBSVORRICHTUNG**
PLANAR DRIVE DEVICE AND METHOD FOR OPERATING A PLANAR DRIVE DEVICE
DISPOSITIF D'ENTRAÎNEMENT PLANAIRE ET PROCÉDÉ PERMETTANT DE FAIRE FONCTIONNER UN DISPOSITIF D'ENTRAÎNEMENT PLANAIRE

(30) Priorität: 25.06.2021 DE 102021116528
(43) Veröffentlichungstag der Anmeldung: 28.12.2022
(73) Patentinhaber: Syntegon Technology GmbH, 71332 Waiblingen (DE)
(72) Erfinder: Schwarz, Sebastian, 91616 Neusitz (DE); Kleinert, Marcus, 74599 Wallhausen (DE)
(74) Vertreter: DREISS Patentanwälte PartG mbB

(56) Entgegenhaltungen:
- WO-A1-2018/176137
- WO-A1-2020/243814

## Beschreibung

Die Erfindung betrifft eine Planarantriebsvorrichtung mit einer ersten Plattform und mit einer zweiten Plattform, welche in einer X-Y-Ebene auf einem Antriebstisch bewegbar sind, wobei die erste Plattform ein Gestell, ein Getriebe und eine Arbeitsplattform zur Anordnung eines Arbeitswerkzeugs aufweist, wobei das Getriebe eine Verstellung des Abstands der Arbeitsplattform zu der X-Y-Ebene ermöglicht, wobei die zweite Plattform ein Gestell und ein Antriebsglied aufweist, das zumindest mittelbar mit der Arbeitsplattform bewegungsgekoppelt ist, sodass durch Veränderung eines Abstands der beiden Plattformen innerhalb der X-Y-Ebene der Abstand der Arbeitsplattform zu der X-Y-Ebene verstellbar ist.

Aus der WO 2018/176137 A1, der WO 2020/243 814 A1 und der DE 10 2006 038 505 A1 sind eingangs genannte Planarantriebsvorrichtungen bekannt. Deren Plattformen werden auch als "Mover" bezeichnet, welche beispielsweise mit Magnetkräften auf dem Antriebstisch antreibbar sind. Die Plattformen sind innerhalb der X-Y-Ebene frei bewegbar. Ein Abstand eines an der ersten Arbeitsplattform angeordneten Arbeitswerkzeug zu der X-Y-Ebene kann ebenfalls durch Bewegung der Plattformen eingestellt werden, sodass das Arbeitswerkzeugs frei im Raum positionierbar ist.

Zur Betätigung des Arbeitswerkzeugs bedarf es einer Energieversorgung. Hierfür kann eine stationäre Energiequelle vorgehalten werden, die über eine Leitung mit einem Antrieb des Arbeitswerkzeugs verbunden ist. Es kann auch ein Energiespeicher vorgehalten werden, der gemeinsam mit der Arbeitsplattform bewegt wird und in Intervallen wieder aufgeladen wird.

Der vorliegenden Erfindung liegt die Aufgabe zugrunde, ein Arbeitswerkzeug der Vorrichtung in einfacher Weise betätigen zu können.

Diese Aufgabe wird bei einer Planarantriebsvorrichtung der eingangs genannten Art dadurch gelöst, dass für die Verstellung des Abstands der Arbeitsplattform zu der X-Y-Ebene das Antriebsglied und das Getriebe in einer zu der X-Y-Ebene senkrechten Bewegungsebene wirksam sind, dass das Antriebsglied entlang einer zu der Bewegungsebene senkrechten Arbeitsachse relativ zu der Arbeitsplattform bewegbar ist, und dass ein erster Abschnitt des Arbeitswerkzeugs mit dem Antriebsglied verbunden und zweiter Abschnitt des Arbeitswerkzeugs mit der Arbeitsplattform verbunden ist, sodass durch Relativbewegung der Plattformen in der X-Y-Ebene in einer zu der Arbeitsachse parallelen Richtung das Arbeitswerkzeug in zumindest zwei unterschiedliche Arbeitszustände überführbar ist, in welchen der erste Abschnitt und der zweite Abschnitt voneinander abweichende Relativlagen einnehmen.

Die erfindungsgemäße Planarantriebsvorrichtung hat den Vorteil, dass die Energie, die zur Betätigung des Arbeitswerkzeugs erforderlich ist, durch eine Relativbewegung der Plattformen bereitgestellt werden kann, welche sich auf dem Antriebstisch bewegen. Die für diese Bewegung benötigten Antriebe und Antriebsenergie stehen bereits für die Bewegung der Plattformen in der X-Y-Bewegung zur Verfügung. Dies ermöglicht es, auf eingangs genannte zusätzliche Bauteile einer weiteren Energieversorgung - die nur dem Arbeitswerkzeug zugeordnet ist - verzichten zu können. Dies hat den Vorteil, dass das Arbeitswerkzeug von Leitungen unbehindert frei positionierbar ist (im Vergleich zu einer stationären Energiequelle) und dass die Arbeitsplattform ausschließlich zur Anordnung des Arbeitswerkzeugs nutzbar ist (im Vergleich zu einem an der Arbeitsplattform angeordneten Energiespeicher).

Zur Verstellung des Abstands der Arbeitsplattform zu der X-Y-Ebene bewegen sich das Antriebsglied der zweiten Plattform sowie die Glieder oder eine Teilmenge der Glieder des Getriebes und die Arbeitsplattform der ersten Plattform in einer zu der X-Y-Ebene senkrechten Bewegungsebene. Dies ermöglicht eine frei wählbare Positionierung des Arbeitswerkzeugs innerhalb eines X-Y-Z-Raums.

Die zweite Plattform und dessen Antriebsglied sind in einer zu der genannten Bewegungsebene senkrechten Richtung entlang einer Arbeitsachse relativ zu der Arbeitsplattform bewegbar. Dabei ist das Antriebsglied jedoch vorzugsweise unbewegbar mit einem ersten Abschnitt des Arbeitswerkzeugs verbunden, sodass eine Bewegung der zweiten Plattform in zu der Arbeitsachse paralleler Richtung damit einhergeht, dass sich dieser erste Abschnitt des Arbeitswerkzeugs parallel zu der Arbeitsachse gemeinsam mit der zweiten Plattform bewegt. Auf diese Weise wird eine Relativbewegung zu einem zweiten Abschnitt des Arbeitswerkzeugs hergestellt, der vorzugweise unbewegbar mit der Arbeitsplattform verbunden ist. Auf diese Weise ist es möglich, das Arbeitswerkzeug in zumindest zwei unterschiedliche Arbeitszustände zu überführen, ohne dabei auf eine zusätzliche Energieversorgung zurückgreifen zu müssen.

Besonders bevorzugt ist es, wenn das Arbeitswerkzeug eine Mehrzahl von Arbeitsbereichen aufweist. Deren Arbeitszustände können ebenfalls - vorzugsweise zueinander simultan - durch Relativbewegung der beiden Plattformen in zu der Arbeitsachse paralleler Richtung verändert werden.

Insbesondere ist es bevorzugt, wenn das Arbeitswerkzeug ein Greifwerkzeug ist, das in einem ersten Arbeitszustand geschlossen und in einem vom dem ersten Arbeitszustand abweichenden zweiten Arbeitszustand geöffnet ist. Hierbei korrespondiert ein geöffneter Zustand des Greifwerkzeugs damit, dass das Greifwerkzeug relativ zu mindestens einem zu greifenden Objekt bewegbar ist. Der geschlossene Zustand korrespondiert damit, dass mindestens ein Objekt an dem Greifwerkzeug gehalten ist.

Eine bevorzugte Ausführungsform sieht vor, dass das Getriebe als Viergelenkkette ausgebildet ist, wobei das Gestell und die Arbeitsplattform zwei Getriebeglieder bilden. Diese Getriebeglieder sind insbesondere über eine Doppelschwinge miteinander gekoppelt.

Insbesondere ist es bevorzugt, dass die Viergelenkkette als Parallelogrammführung mit vier Drehgelenken ausgebildet ist. Dies ermöglicht eine präzise und einfache Änderung der Position der Arbeitsplattform zur Verstellung des Abstands der Arbeitsplattform relativ zu der X-Y-Ebene.

Auch für das Antriebsglied der zweiten Plattform ist es bevorzugt, dass dieses mittels eines Drehgelenks an der zweiten Plattform gelagert ist. Dies ermöglicht die einfache Bereitstellung eines Kurbelglieds, das zumindest mittelbar mit der Arbeitsplattform zusammenwirkt. Dabei kann das Antriebsglied mit der Arbeitsplattform selbst oder aber mit einem Teil des Getriebes der ersten Plattform bewegbar verbunden sein.

Insbesondere ist es bevorzugt, wenn das Antriebsglied mittels eines Drehschubgelenks (zumindest mittelbar) mit der Arbeitsplattform bewegungsgekoppelt ist. Dies bedeutet, dass das Antriebsglied bei einer Bewegung innerhalb der Bewegungsebene die Position einer Drehachse des Drehschubgelenks innerhalb der Bewegungsebene verändert (zwecks Abstandsverstellung der Arbeitsplattform) und dass durch Bewegung des Antriebsglieds parallel zu der Drehachse des Drehschubgelenks (entspricht der Arbeitsachse) das Arbeitswerkzeug in vorstehend beschriebener Weise betätigt wird.

Insbesondere ist es bevorzugt, dass ein Gelenkbolzen des Drehschubgelenks gleichzeitig ein Drehgelenk des Getriebes bildet. Hierdurch kann ein besonders einfacher und zuverlässiger Aufbau bereitgestellt werden.

Eine weitere Vereinfachung des Aufbaus ergibt sich, wenn die beiden Gestelle der beiden Plattformen als Gleichteile bereitgestellt sind.

Ferner ist es bevorzugt, wenn ein Anschlag für das Getriebe zur Definition einer Endstellung des Arbeitswerkzeugs vorgesehen ist. Dieser Anschlag ist vorzugsweise an dem Gestell der ersten Plattform angeordnet. Dies ermöglich eine besonders präzise Positionierung des Arbeitswerkzeugs.

Es ist ferner bevorzugt, wenn das Arbeitswerkzeug zumindest in einer Endstellung über eine Umgrenzung der X-Y-Ebene des Antriebstischs hinausragt. Auf diese Weise kann das Arbeitswerkzeug auch in einem außerhalb des Antriebstischs angeordneten Produktionsbereich positioniert werden.

Die Erfindung betrifft ferner ein Verfahren zum Betrieb einer vorstehend Planarantriebsvorrichtung. Erfindungsgemäß werden die beiden Plattformen in der X-Y-Ebene so angetrieben, dass sich ein Abstand der Arbeitsplattform zu der X-Y-Ebene entlang einer zu der X-Y-Ebene senkrechten Z-Achse ändert. Auf diese Weise kann das Arbeitswerkzeug in der zu der X-Y-Ebene senkrechter Richtung angehoben und gesenkt werden.

Zur Überführung des Arbeitswerkzeugs in einen geänderten Arbeitszustand ist es bevorzugt, wenn die erste Plattform stillsteht und die zweite Plattform bewegt wird. Dies ermöglicht eine Betätigung des Arbeitswerkzeugs mit ruhendem zweiten Abschnitt des Arbeitswerkzeugs.

Weitere Merkmale und Vorteile der Erfindung sind Gegenstand der nachfolgenden Beschreibung und der zeichnerischen Darstellung eines bevorzugten Ausführungsbeispiels.

In der Zeichnung zeigt:

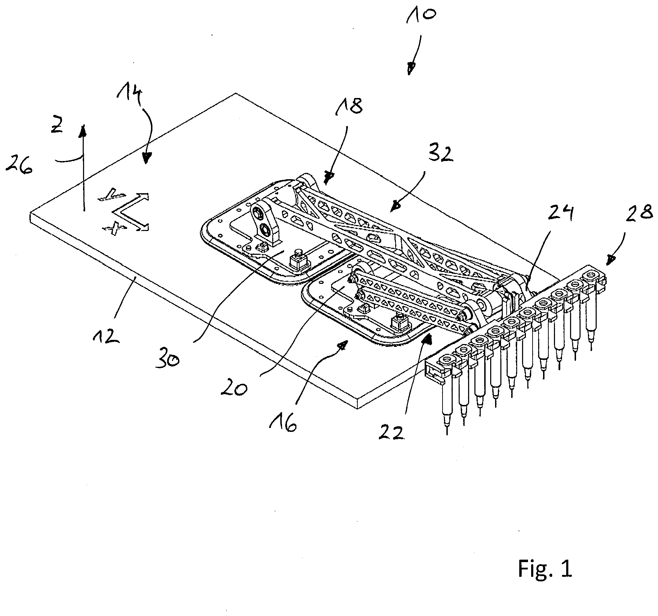

- Fig. 1: eine perspektivische Ansicht einer Ausführungsform einer Planarantriebsvorrichtung mit einem Arbeitswerkzeug und mit an dem Arbeitswerkzeug gehaltenen Objekten;
- Fig. 2: eine Seitenansicht der Planarantriebsvorrichtung gemäß Fig. 1;
- Fig. 3: eine Draufsicht der Planarantriebsvorrichtung gemäß Fig. 1;
- Fig. 4: eine der Fig. 3 entsprechende Draufsicht der Planarantriebsvorrichtung bei Betätigung des Arbeitswerkzeugs;
- Fig. 5: einen in Fig. 3 mit V bezeichneten Ausschnitt in vergrößerter Darstellung, ohne Objekte und in einem geschlossenen Arbeitszustand des Arbeitswerkzeugs; und
- Fig. 6: eine der Fig. 5 entsprechende Darstellung in einem geöffneten Arbeitszustand des Arbeitswerkzeugs.

Eine Planarantriebsvorrichtung ist in der Zeichnung insgesamt mit dem Bezugszeichen 10 bezeichnet. Diese umfasst einen Antriebstisch 12 der eine gerade X-Y-Ebene 14 definiert, in welcher eine erste Plattform 16 und davon unabhängig eine zweite Plattform 18 bewegbar antreibbar sind.

Die erste Plattform 16 umfasst ein Gestell 20, ein Getriebe 22 und eine Arbeitsplattform 24 zur Anordnung eines Arbeitswerkzeugs 28. Der Abstand der Arbeitsplattform 24 und des Arbeitswerkzeugs zu der X-Y-Ebene 14 ist verstellbar, sodass das Arbeitswerkzeug 28 frei in einem Raum positionierbar ist, der durch die X-Y-Ebene 14 und dazu senkrechte Z-Achse 26 definiert ist.

Die zweite Plattform 18 umfasst ein Gestell 30 und ein Antriebsglied 32.

Das Gestell 20 der ersten Plattform 16 umfasst ein Gestellteil 34 zur Anordnung von zwei Drehgelenken 36 und 38. An jedem dieser Drehgelenke ist jeweils eine Schwinge 40 bzw. 42 drehbar gelagert. Die Schwingen 40 und 42 sind ihrerseits über ein drittes Drehgelenk 44 bzw. ein viertes Drehgelenk 46 drehbar mit der Arbeitsplattform 24 verbunden.

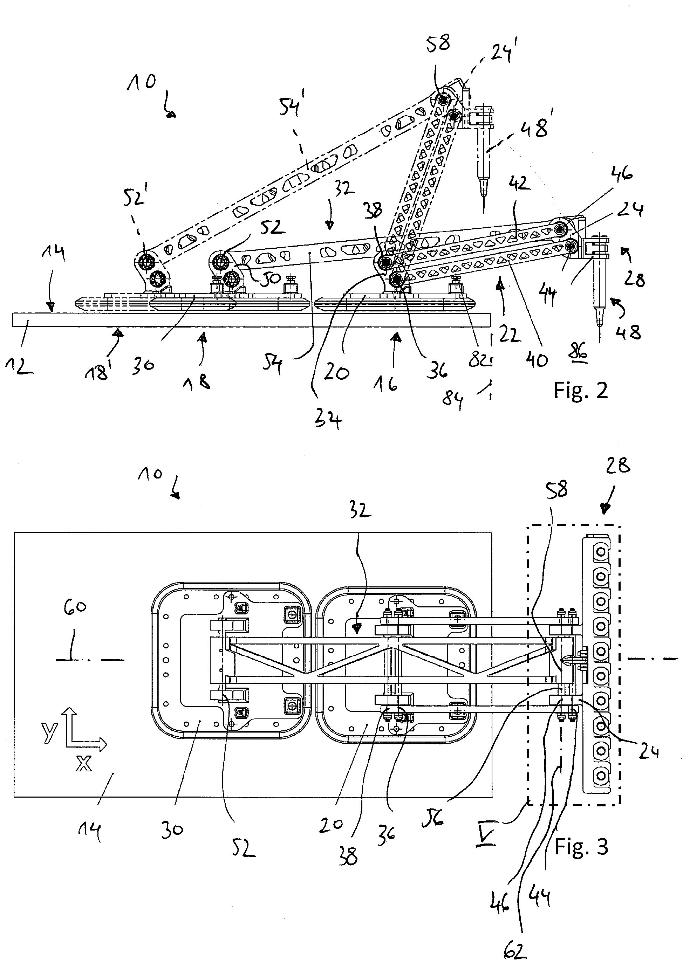

Da der Abstand zwischen dem ersten Drehgelenk 36 und dem zweiten Drehgelenk 38 identisch ist zu dem Abstand zwischen dem dritten Drehgelenk 44 und dem vierten Drehgelenk 46 und da die Gelenkabstände der Schwingen 40 und 42 identisch sind, bildet das Getriebe 22 eine Viergelenkkette in Form einer Parallelogrammführung. Diese ermöglicht es, dass die Arbeitsplattform 24 entlang einer kreisbogenförmigen Bewegung um das Gestellteil 34 herum eine identische Orientierung beibehält, vergleiche Bezugszeichen 24 und 24' in Figur 2. Auf diese Weise kann auch ein an dem Arbeitswerkzeug 28 gehaltenes Objekt 48 seine Raumlage beibehalten, vergleiche Bezugszeichen 48' in Figur 2.

Das Gestell 30 der zweiten Plattform 18 umfasst ein Gestellteil 50, das vorzugsweise einen zu dem Gestellteil 34 identischen Aufbau aufweist. Das Gestellteil 50 dient zur Anordnung eines Drehgelenks 52 zur Drehlagerung des Antriebsglieds 32, das vorzugsweise in Form einer Kurbelstange 54 bereitgestellt ist.

Das vierte Drehgelenk 46 des Getriebes 22 der ersten Plattform 16 umfasst einen Gelenkbolzen 56, vergleiche Figur 3. Ein zu dem Drehgelenk 52 beabstandetes Ende des Antriebsglieds 32 ist über ein Drehschubgelenk 58 mit diesem Gelenkbolzen 56 verbunden. Das Antriebsglied 32 ist also im Bereich des Drehschubgelenks 58 um dem Gelenkbolzen 56 herum verdrehbar und gleichzeitig parallel zu der Drehachse des Drehgelenks 46 relativ zu dem Gelenkbolzen 56 verschiebbar.

Eine Verstellung des Abstands der Arbeitsplattform 54 zu der X-Y-Ebene 14 geht mit einer Bewegung der Schwingen 40 und 42 und der Arbeitsplattform 24 der ersten Plattform 16 und des Antriebsglieds 32 der zweiten Plattform 18 innerhalb einer Bewegungsebene 60 einher. Diese ist senkrecht zu der X-Y-Ebene 14 orientiert, vergleiche Figur 3.

Zur Einstellung eines geänderten Abstands der Arbeitsplattform 24 zu der X-Y-Ebene 14 wird ein Abstand zwischen den beiden Plattformen 16 und 18 innerhalb der X-Y-Ebene 14 verändert, vergleiche Figur 2, in der eine Bewegung der zweiten Plattform 18 durch gestrichelte Linien angedeutet ist, vergleiche Bezugszeichen 18'. Vorzugsweise ruht dabei die erste Plattform 16.

Durch die vorstehend beschriebene Relativbewegung der Gestelle 20 bzw. 30 der Plattformen 16 und 18 wird das Kurbelglied 54 um das Drehgelenk 52 herum verschwenkt. Diese Bewegung überträgt das Drehschublager 58 - innerhalb der Bewegungsebene 60 - auf den Gelenkbolzen 56, der wiederum die Arbeitsplattform 24 und die Schwingen 40 und 42 antreibt für eine kreisbogenförmige Bewegung der Arbeitsplattform 24 relativ zu dem Gestell 20 der ersten Plattform 16.

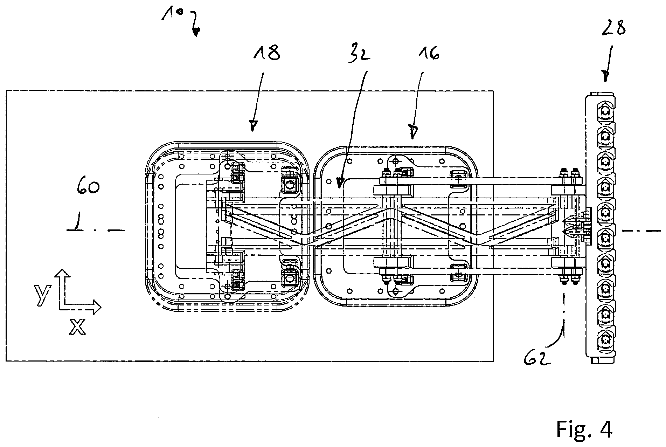

Die Drehachsen sämtlicher Drehgelenke 36, 38, 44, 46 und 52 verlaufen zueinander parallel und zu der Bewegungsebene 60 senkrecht. Gleichzeitig ist das Antriebsglied 32 mittels des Drehschubgelenks 58 entlang einer zu der Bewegungsebene 60 senkrechten Arbeitsachse 62 (vergleiche Figuren 3 und 4) relativ zu der Arbeitsplattform 24 bewegbar. Diese Bewegbarkeit ist in Figur 4 durch strichpunktierte Darstellungen der zweiten Plattform 18 und des Antriebsglieds 32 verdeutlicht.

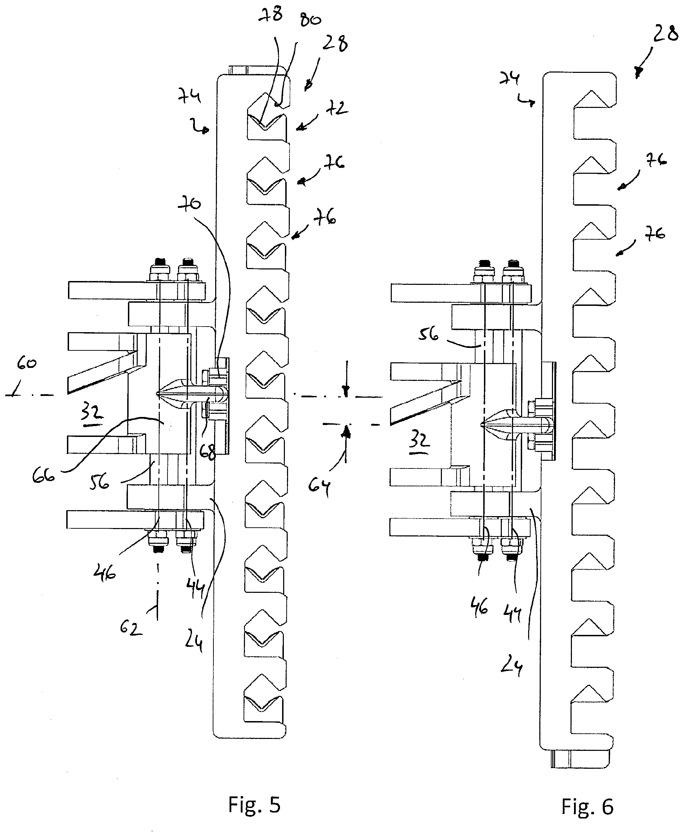

Eine solche Bewegung in zu der Arbeitsachse 62 paralleler Richtung geht mit einem in den Figuren 5 und 6 dargestellten Versatz 64 des Antriebsglieds 32 entlang der Arbeitsachse 62 und senkrecht zu der Bewegungsebene 60 einher.

Das Antriebsglied 32 weist eine endseitig angeordnete Lagerhülse 66 zur dreh- und verschiebbaren Aufnahme des Gelenkbolzens 56 auf. Das Antriebsglied 32 ist ferner über einen Koppelabschnitt 68 mit einem Aufnahmebereich 70 eines ersten Abschnitts 72 des Arbeitswerkzeugs 28 verbunden. Eine Bewegung des Antriebsglieds 32 in einer Richtung parallel zu der Arbeitsachse 62 wird also über den Koppelabschnitt 68 und den Aufnahmeabschnitt 70 auf den ersten Abschnitt 72 des Arbeitswerkzeugs 28 übertragen.

Ein zweiter Abschnitt 74 des Arbeitswerkzeugs 28 ist fest mit der Arbeitsplattform 24 verbunden.

Das Arbeitswerkzeug 28 weist eine Mehrzahl von Arbeitsbereichen 76 auf, die insbesondere jeweils als Greifbereiche ausgebildet sind. Diese Greifbereiche können zum Greifen eines Objekts 48 geschlossen werden (erster Arbeitszustand des Arbeitswerkzeugs 28, vergleiche Figur 5) oder zur Freigabe eines Objekts 48 geöffnet werden (zweiter Arbeitszustand des Arbeitswerkzeugs 28, vergleiche Figur 6).

Der erste Abschnitt 72 des Arbeitswerkzeugs 28 weist eine Grifffläche 78 auf, welche einer Grifffläche 80 des zweiten Abschnitts 74 des Arbeitswerkzeugs 28 zugewandt ist. Die Änderung des Abstands der Griffflächen 78 und 80 geht mit einem Schließen der Greifbereiche 76 (vergleiche Figur 5) oder mit einem Öffnen der Greifbereiche 76 (vergleiche Figur 6) einher.

Die Greifbereich 76 werden geöffnet und geschlossen, indem das Gestell 30 der zweiten Plattform 18 in der X-Y-Ebene - bei vorzugsweise stillstehender erster Plattform 16 - in zu der Arbeitsachse 62 paralleler Richtung angetrieben wird, wodurch sich das Antriebsglied 32 entlang der Arbeitsachse 62 verschiebt und somit den Koppelabschnitt 68 und den Aufnahmeabschnitt 70 und den ersten Abschnitt 72 des Arbeitswerkzeugs 28 mitnimmt und somit den Abstand der Griffflächen 78 relativ zu den feststehenden Griffflächen 80 des zweiten Abschnitts 74 des Arbeitswerkzeugs 28 verändert.

Es ist möglich, aber nicht erforderlich, dass eine Betätigung des Arbeitswerkzeugs 28 in einer Endstellung des Getriebes 22 erfolgt, in welcher das Getriebe 22 eine Endlage einnimmt. Zur Definition einer solchen Endlage kann ein Anschlag 82 vorgesehen sein, der vorzugsweise an dem Gestell 20 der ersten Plattform 16 angeordnet ist und der als Auflage für die Schwinge 40 dient. Dies ist insbesondere vorteilhaft, wenn in dieser Endlage das Arbeitswerkzeug 28 über eine Umgrenzung 84 des Antriebstischs 12 hinausragt (vgl. Fig. 2), sodass das Arbeitswerkzeug auch in einem Produktionsbereich 86 außerhalb des Antriebstischs 12 positionierbar ist.

## Patentansprüche

1. Planarantriebsvorrichtung (10) mit einer ersten Plattform (16) und mit einer zweiten Plattform (18), welche in einer X-Y-Ebene (14) auf einem Antriebstisch (12) bewegbar sind, wobei die erste Plattform (16) ein Gestell (20), ein Getriebe (22) und eine Arbeitsplattform (24) zur Anordnung eines Arbeitswerkzeugs (28) aufweist, wobei das Getriebe (22) eine Verstellung des Abstands der Arbeitsplattform (24) zu der X-Y-Ebene (14) ermöglicht, wobei die zweite Plattform (18) ein Gestell (30) und ein Antriebsglied (32) aufweist, das zumindest mittelbar mit der Arbeitsplattform (24) bewegungsgekoppelt ist, sodass durch Veränderung eines Abstands der beiden Plattformen (16, 18) innerhalb der X-Y-Ebene (14) der Abstand der Arbeitsplattform (24) zu der X-Y-Ebene (14) verstellbar ist, wobei für die Verstellung des Abstands der Arbeitsplattform (24) zu der X-Y-Ebene (14) das Antriebsglied (32) und das Getriebe (22) in einer zu der X-Y-Ebene (14) senkrechten Bewegungsebene (60) wirksam sind, dass das Antriebsglied (32) entlang einer zu der Bewegungsebene (60) senkrechten Arbeitsachse (62) relativ zu der Arbeitsplattform (24) bewegbar ist, **dadurch gekennzeichnet, dass** ein erster Abschnitt (72) des Arbeitswerkzeugs (28) mit dem Antriebsglied (32) verbunden und ein zweiter Abschnitt (74) des Arbeitswerkzeugs (28) mit der Arbeitsplattform (24) verbunden ist, sodass durch Relativbewegung der Plattformen (16, 18) in der X-Y-Ebene (14) in einer zu der Arbeitsachse (62) parallelen Richtung das Arbeitswerkzeug (28) in zumindest zwei unterschiedliche Arbeitszustände überführbar ist, in welchen der erste Abschnitt (72) und der zweite Abschnitt (74) voneinander abweichende Relativlagen einnehmen.

2. Planarantriebsvorrichtung (10) nach Anspruch 1, **dadurch gekennzeichnet, dass** das Arbeitswerkzeug (28) eine Mehrzahl von Arbeitsbereichen (76) aufweist.

3. Planarantriebsvorrichtung (10) nach einem der vorstehenden Ansprüche, **dadurch gekennzeichnet, dass** das Arbeitswerkzeug (28) ein Greifwerkzeug ist, das in einem ersten Arbeitszustand geschlossen und in einem von dem ersten Arbeitszustand abweichenden zweiten Arbeitszustand geöffnet ist.

4. Planarantriebsvorrichtung (10) nach einem der vorstehenden Ansprüche, **dadurch gekennzeichnet, dass** das Getriebe (22) als Viergelenkkette ausgebildet ist, wobei das Gestell (20) und die Arbeitsplattform (24) zwei Getriebeglieder bilden.

5. Planarantriebsvorrichtung (10) nach Anspruch 4, **dadurch gekennzeichnet, dass** die Viergelenkkette als Parallelogrammführung mit vier Drehgelenken (36, 38, 44, 46) ausgebildet ist.

6. Planarantriebsvorrichtung (10) nach einem der vorstehenden Ansprüche, **dadurch gekennzeichnet, dass** das Antriebsglied (32) mittels eines Drehgelenks (52) an der zweiten Plattform (18) gelagert ist.

7. Planarantriebsvorrichtung (10) nach einem der vorstehenden Ansprüche, **dadurch gekennzeichnet, dass** das Antriebsglied (32) mittels eines Drehschubgelenks (58) mit der Arbeitsplattform (24) bewegungsgekoppelt ist.

8. Planarantriebsvorrichtung (10) nach Anspruch 7, **dadurch gekennzeichnet, dass** ein Gelenkbolzen (56) des Drehschubgelenks (58) gleichzeitig ein Drehgelenk (46) des Getriebes (22) bildet.

9. Planarantriebsvorrichtung (10) nach einem der vorstehenden Ansprüche, **dadurch gekennzeichnet, dass** die beiden Gestelle (20, 30) der beiden Plattformen (16, 18) als Gleichteile bereitgestellt sind.

10. Planarantriebsvorrichtung (10) nach einem der vorstehenden Ansprüche, **dadurch gekennzeichnet, dass** ein Anschlag (82) für das Getriebe (22) zur Definition einer Endstellung des Arbeitswerkzeugs (28) vorgesehen ist.

11. Planarantriebsvorrichtung (10) nach einem der vorstehenden Ansprüche, **dadurch gekennzeichnet, dass** das Arbeitswerkzeug (28) zumindest in einer Endstellung über eine Umgrenzung (84) der X-Y-Ebene (14) des Antriebstischs (12) hinausragt.

12. Verfahren zum Betrieb einer Planarantriebsvorrichtung (10) nach einem der vorstehenden Ansprüche, **dadurch gekennzeichnet, dass** die beiden Plattformen (16, 18) in der X-Y-Ebene (14) so angetrieben werden, dass sich ein Abstand der Arbeitsplattform (24) zu der X-Y-Ebene (14) entlang einer zu der X-Y-Ebene (14) senkrechten Z-Achse (26) ändert und/oder dass zur Überführung des Arbeitswerkzeugs (28) in einen geänderten Arbeitszustand die erste Plattform (16) stillsteht und die zweite Plattform (18) bewegt wird.

## Claims

1. Planar drive device (10) having a first platform (16) and having a second platform (18), which platforms are movable in an X-Y plane (14) on a work bench (12), wherein the first platform (16) has a frame (20), a transmission (22) and a working platform (24) for the arrangement of a work tool (28), wherein the transmission (22) permits an adjustment of the distance of the working platform (24) with respect to the X-Y plane (14), wherein the second platform (18) has a frame (30) and a drive member (32) which is coupled in terms of movement at least indirectly to the working platform (24) such that the distance of the working platform (24) from the X-Y plane (14) is adjustable by changing a distance between the two platforms (16, 18) within the X-Y plane (14), wherein, for the adjustment of the distance of the working platform (24) from the X-Y plane (14), the drive member (32) and the transmission (22) are effective in a movement plane (60) perpendicular to the X-Y plane (14), in that the drive member (32) is movable relative to the working platform (24) along a working axis (62) perpendicular to the movement plane (60), **characterized in that** a first portion (72) of the work tool (28) is connected to the drive member (32) and a second portion (74) of the work tool (28) is connected to the working platform (24) such that, by relative movement of the platforms (16, 18) in the X-Y plane (14) in a direction parallel to the working axis (62), the work tool (28) can be transferred into at least two different working states in which the first portion (72) and the second portion (74) take up different relative positions from one another.

2. Planar drive device (10) according to claim 1, **characterized in that** the work tool (28) has a plurality of working regions (76).

3. Planar drive device (10) according to one of the preceding claims, **characterized in that** the work tool (28) is a gripping tool which is closed in a first working state and is open in a second working state differing from the first working state.

4. Planar drive device (10) according to one of the preceding claims, **characterized in that** the transmission (22) is designed as a four-bar chain, wherein the frame (20) and the working platform (24) form two transmission members.

5. Planar drive device (10) according to claim 4, **characterized in that** the four-bar chain is designed as a parallelogram guide with four rotary joints (36, 38, 44, 46).

6. Planar drive device (10) according to one of the preceding claims, **characterized in that** the drive member (32) is mounted on the second platform (18) by means of a rotary joint (52).

7. Planar drive device (10) according to one of the preceding claims, **characterized in that** the drive member (32) is coupled in terms of movement to the working platform (24) by means of a rotary prismatic joint (58).

8. Planar drive device (10) according to claim 7, **characterized in that** a pivot bolt (56) of the rotary prismatic joint (58) at the same time forms a rotary joint (46) of the transmission (22).

9. Planar drive device (10) according to one of the preceding claims, **characterized in that** the two frames (20, 30) of the two platforms (16, 18) are provided as identical parts.

10. Planar drive device (10) according to one of the preceding claims, **characterized in that** a stop (82) is provided for the transmission (22) in order to define an end position of the work tool (28).

11. Planar drive device (10) according to one of the preceding claims, **characterized in that** the work tool (28) projects at least in an end position beyond a border (84) of the X-Y plane (14) of the work bench (12).

12. Method for operating a planar drive device (10) according to one of the preceding claims, **characterized in that** the two platforms (16, 18) are driven in the X-Y plane (14) in such a manner that a distance of the working platform (24) from the X-Y plane (14) changes along a Z axis (26) which is perpendicular to the X-Y plane (14), and/or **in that**, in order to transfer the work tool (28) into a changed working state, the first platform (16) is at a standstill and the second platform (18) is moved.

## Revendications

1. Dispositif d'entraînement planaire (10) avec une première plateforme (16) et avec une deuxième plateforme (18), lesquelles sont mobiles dans un plan X-Y (14) sur une table d'entraînement (12), dans lequel la première plateforme (16) présente un bâti (20), une transmission (22) et une plateforme de travail (24) pour la disposition d'un outil de travail (28), dans lequel la transmission (22) permet un réglage de la distance de la plateforme de travail (24) par rapport au plan X-Y (14), dans lequel la deuxième plateforme (18) présente un bâti (30) et un élément d'entraînement (32), qui est accouplé en mouvement au moins indirectement à la plateforme de travail (24), de sorte que par modification d'une distance des deux plateformes (16, 18) à l'intérieur du plan X-Y (14) la distance de la plateforme de travail (24) par rapport au plan X-Y (14) est réglable, dans lequel pour le réglage de la distance de la plateforme de travail (24) par rapport au plan X-Y (14) l'élément d'entraînement (32) et la transmission (22) agissent dans un plan de mouvement (60) perpendiculaire au plan X-Y (14), que l'élément d'entraînement (32) est mobile par rapport à la plateforme de travail (24) le long d'un axe de travail (62) perpendiculaire au plan de mouvement (60), **caractérisé en ce**
**qu'**une première partie (72) de l'outil de travail (28) est reliée à l'élément d'entraînement (32) et une deuxième partie (74) de l'outil de travail (28) est reliée à la plateforme de travail (24), de sorte que par un mouvement relatif des plateformes (16, 18) dans le plan X-Y (14) dans une direction parallèle à l'axe de travail (62) l'outil de travail (28) peut être amené dans au moins deux états de travail différents, dans lesquels la première partie (72) et la deuxième partie (74) occupent des positions relatives différentes l'une de l'autre.

2. Dispositif d'entraînement planaire (10) selon la revendication 1, **caractérisé en ce que** l'outil de travail (28) présente une pluralité de zones de travail (76).

3. Dispositif d'entraînement planaire (10) selon l'une quelconque des revendications précédentes, **caractérisé en ce que** l'outil de travail (28) est un outil de préhension, qui est fermé dans un premier état de travail et ouvert dans un deuxième état de travail différent du premier état de travail.

4. Dispositif d'entraînement planaire (10) selon l'une quelconque des revendications précédentes, **caractérisé en ce que** la transmission (22) est réalisée sous la forme d'une chaîne à quatre joints articulés, dans lequel le bâti (20) et la plateforme de travail (24) forment deux éléments de transmission.

5. Dispositif d'entraînement planaire (10) selon la revendication 4, **caractérisé en ce que** la chaîne à quatre joints articulés est réalisée sous la forme d'une suspension à parallélogramme avec quatre articulations tournantes (36, 38, 44, 46) .

6. Dispositif d'entraînement planaire (10) selon l'une quelconque des revendications précédentes, **caractérisé en ce que** l'élément d'entraînement (32) est monté sur la deuxième plateforme (18) au moyen d'une articulation tournante (52).

7. Dispositif d'entraînement planaire (10) selon l'une quelconque des revendications précédentes, **caractérisé en ce que** l'élément d'entraînement (32) est accouplé en mouvement à la plateforme de travail (24) au moyen d'un joint articulé cylindrique (58).

8. Dispositif d'entraînement planaire (10) selon la revendication 7, **caractérisé en ce qu'**un boulon d'articulation (56) du joint articulé cylindrique (58) forme simultanément une articulation tournante (46) de la transmission (22).

9. Dispositif d'entraînement planaire (10) selon l'une quelconque des revendications précédentes, **caractérisé en ce que** les deux bâtis (20, 30) des deux plateformes (16, 18) sont fournis à l'identique.

10. Dispositif d'entraînement planaire (10) selon l'une quelconque des revendications précédentes, **caractérisé en ce qu'**une butée (82) pour la transmission (22) est prévue pour la définition d'une position finale de l'outil de travail (28).

11. Dispositif d'entraînement planaire (10) selon l'une quelconque des revendications précédentes, **caractérisé en ce que** l'outil de travail (28) au moins dans une position finale fait saillie d'une délimitation (84) du plan X-Y (14) de la table d'entraînement (12).

12. Procédé pour faire fonctionner un dispositif d'entraînement planaire (10) selon l'une quelconque des revendications précédentes, **caractérisé en ce que** les deux plateformes (16, 18) dans le plan X-Y (14) sont entraînées de sorte qu'une distance de la plateforme de travail (24) par rapport au plan X-Y (14) le long d'un axe Z (26) perpendiculaire au plan X-Y (14) varie et/ou que pour amener l'outil de travail (28) dans un état de travail modifié la première plateforme (16) est arrêtée et la deuxième plateforme (18) est déplacée.
